# EUROPEAN PATENT APPLICATION

(11) **EP 4 641 854 A1**
(43) Date of publication of application: **29.10.2025**
(21) Application number: 25170687.5
(22) Date of filing: 15.04.2025
(51) Int. Cl.: H02G 3/04, H02G 3/34, H02G 3/00

(54) **DEVICE FOR CONCEALING ELECTRICAL OR COMMUNICATIONS CABLES IN A WALL**

(30) Priority: 22.04.2024 ES 202430751 U
(71) Applicant: Unex Aparellaje Electrico S.L., 08005 Barcelona (ES)
(72) Inventor: SALCEDO SUÑOL, Eloi, Barcelona (ES)
(74) Representative: Curell Suñol S.L.P.

(57) **Abstract**

The present invention relates to a device for concealing electrical or communications cables in a wall, comprising a support (1) and a moulding (7) fixed by pressure to the support (1). An upper edge (8) of the moulding (7) is coupled to a free end (6) of the support (5). Fitting means (11) at a lower edge (9) of the moulding (7) are snap-fitted with fitting means (12) in the support (1), having an elastically flexible tab (13) and a push element (14) to release the snap-fitting. In a fixing position, the upper edge (8) of the moulding (7) is coupled to the free end (6) of the support (6), the fitting means (11, 12) are snap-fitted together, and the push element (14) is accessible from the outside through a separation between the lower edge (9) of the moulding (7) and the wall.

## Description

### Field of the Invention

The invention is comprised in the field of devices used for concealing electrical or communications cables installed in a wall. In the preferred applications of the invention, the cables are communications cables, particularly fiber optic cables, and the wall in which the cables are installed is a façade of a building.

More specifically, the invention relates to a device for concealing electrical or communications cables in a wall of the type comprising:
- at least one support to be fixed to the wall, said support comprising a base with a flat face in a plane, to be applied against the wall, and fixing means for fixing said base to the wall, and at least one support arm extending in cantilevered fashion away from said base, and having a free end separated from said base;
- at least one moulding, formed by a profile resting against said support arm and removably fixed by pressure to said support, said moulding having an upper edge, a lower edge parallel to said upper edge, and a concave face facing said plane and extending between said upper edge and said lower edge, said support and said moulding being configured such that in a fixing position, in which said moulding is fixed by pressure to said support, the upper edge and the lower edge of the moulding are parallel to said plane and are separated from said plane, the separation distance between said plane and said upper edge being greater than the separation distance between said plane and said lower edge.

### State of the Art

In many urban centers, optic fiber installation to provide connection to communication networks has been performed by laying fiber optic cables at a low height on the façades of buildings, such that the cables extend horizontally on successive façades of buildings. This type of installation has allowed extending fiber optic coverage quickly and at a low cost, facilitating both the laying of new cables and modifications of existing ones, since the cables and junction boxes are within reach of an operator at street level with the help of a ladder. However, this solution has a negative aesthetic impact on the urban landscape. Devices for concealing cables of the type described above have been proposed to reduce the aesthetic impact of the cable bundles laid on the façades. The cables are arranged between the moulding and the wall, such that they are not visible to a person on the street. The separation between the upper edge of the moulding and the wall is large, such that it allows inserting and removing cables without disassembling the moulding. The separation between the lower edge of the moulding and the wall is very small, such that it allows the drainage of rainwater without revealing the cables. The moulding is fixed by pressure to the supports, such that it can be removed and placed again to access the cables, for example, to regroup the cables with cable ties, to fix the cables to the wall, or to handle a specific cable. The operator who performs these operations is usually standing on a step ladder placed on the street curb. To that end, it is important that the operations required to remove the moulding and to place it again are quick and simple.

EP1291995B1 discloses devices of this type, in which the lower edge of the moulding is coupled to a corresponding part of the support, and the upper edge of the moulding is snap-fitted with an elastically flexible part formed at the free end of the arm. A push element at the free end of the arm, protruding above the moulding, allows actuating this elastically flexible part to release the snap-fitting.

### Description of the Invention

The purpose of the invention is to provide a device for concealing electrical or communications cables in a wall, of the type indicated above, in which the operations required to fix the moulding to the supports and to remove the moulding are easier to perform, and in which the fixing of the moulding is robust.

This purpose is achieved by means of a device for concealing electrical or communications cables in a wall, of the type indicated above, characterised in that the upper edge of the moulding is coupled, by shape complementarity, to the free end of the support arm, and said moulding comprises, next to its lower edge, first fitting means that cooperate with corresponding second fitting means comprised in the support, such that said first fitting means are snap-fitted with said second fitting means in the fixing position; said second fitting means comprising an elastically flexible tab and a push element that cooperates with said tab such that, when pressed, said push element causes an elastic bending of said tab which releases the snap-fitting between said first fitting means and said second fitting means; and in that, in the fixing position, said upper edge is coupled to said free end, said first and second fitting means are snap-fitted together, and said push element is accessible from the outside through the separation between said lower edge of the moulding and the plane of the flat face of the base of the support.

In the device according to the invention, the operation for placing the moulding and fixing it to the support is performed by first coupling the upper edge of the moulding to the free end of the arm. In this position, the moulding is self-sustaining and arranged with its lower end close to the second fitting means for snap-fitting arranged in the support, whereby snap-fitting can be very easily performed by simply pushing the lower end of the moulding towards the support. This operating mode is easier and more comfortable for the operator compared to the aforementioned devices of the state of the art. Moreover, in the solution according to the invention, the push element is arranged next to the lower edge of the moulding and therefore more accessible to the operator when he/she needs to remove the moulding. Furthermore, the push element is protected between the moulding and the wall in a lower area of the device which is not exposed to accidental blows during normal cable handling operations performed by the operator. In contrast, in the aforementioned devices of the state of the art, the push element is exposed at an upper end of the arm and can be pressed by accident or damaged by a blow.

Preferably, the upper edge of the moulding is formed such that when it is coupled, by shape complementarity, to the free end of the arm, it completely covers said free end and rests against same. This configuration provides a continuous upper edge of the device installed in the wall, without projections of the free end of the arm, thereby preventing the cables from catching when being handled by the operator. Furthermore, the placement of the moulding is easier since it is more self-sustaining when the upper edge thereof is coupled to the free end of the arm.

Preferably, the push element comprises a push surface, for pressing said push element, facing the plane of the flat face of the base of the support. This solution means that the actuation of the push element is particularly easy for the operator when he/she is standing on a ladder and is facing the wall, since the operator only has to insert his/her fingers through the separation between the wall and the lower edge of the moulding and push the push surface towards him/her.

Preferably, the push surface forms at least one curved cradle, with an arc of curvature according to an axis parallel to the plane of the flat face of the base of the support and perpendicular to the lower edge of the moulding in the fixing position. This shape of the push surface allows the user to find it more easily with just a touch of a finger. Furthermore, it provides an improved seating to push the push surface with the finger.

Preferably, the push surface forms two juxtaposed curved cradles, each of said curved cradles having an arc of curvature according to an axis parallel to the plane of the flat face of the base of the support and perpendicular to the lower edge of the moulding in the fixing position. This configuration allows pressing to be performed more comfortably with two fingers, with each finger exerting less force.

Preferably, the base of the support comprises two juxtaposed concave recesses facing the two juxtaposed curved cradles formed by the push surface. This configuration allows the user to find the push surface even more easily with just the touch of two fingers. Furthermore, it provides a larger space for the user to bend his/her fingers more easily and push the push surface.

In the preferred embodiments, the tab comprises a main flap connected in the body of the support and extending parallel to the plane of the flat face of the base of the support, the push surface being formed in the main flap. That solution allows bending the tab directly and effectively, without having to exert any significant force.

Preferably, the tab comprises a secondary flap extending from a face of the main flap opposite the push surface, said secondary flap being elbow-shaped, with a first segment orthogonal to the plane of the flat face of the base of the support and a second segment parallel to said plane, a shoulder being formed in said second segment facing said main flap. Preferably, the first fitting means comprise a lip extending from the concave face of the moulding and snap-fitting with said shoulder. This configuration provides a robust snap-fitting. Furthermore, the snap-fitting area is well protected.

Preferably, in the fixing position, the lower edge of the moulding is arranged in front of an end of the main flap, such that the moulding covers the space comprised between the second segment of the secondary flap and the main flap. This configuration provides an even better protection of the snap-fitting area.

In the preferred embodiments, the support comprises a first piece comprising the base and a second piece comprising the second fitting means and the support arm, said first piece being slidingly coupled to said second piece, such that the separation distance between said first piece and said second piece coupled to one another, in a direction orthogonal to the plane of the flat face of the base of the support, can be adjusted; and the support comprises fixing means for fixing the relative position between said first piece and said second piece in the direction orthogonal to said plane. This two-piece structure allows adjusting and fixing the distance between the moulding and the wall. Preferably, the first piece has a drawer-shaped part, with a base wall and two facing side walls, and the second piece has a corresponding drawer-shaped part, with a base wall and two side walls, in which said drawer-shaped part of the first piece slidingly fits. The second fitting means are fixed to the base wall of the second piece. The base wall of the first piece comprises a window with the tab and the push element going through same with allowance. This allowance allows the sliding of the second piece with respect to the first piece in the direction orthogonal to said plane. This preferred configuration, with drawer-shaped parts that fit with one another, provides a particularly robust fitting between the first piece and the second piece, that suitably withstands any blows that the support may receive directly or through the moulding.

Preferably, the fixing means comprise an opening in at least one of the side walls of the first piece, a corresponding opening in at least one of the side walls of the second piece, a screw going through said openings, and a nut that is screwed onto said screw. This solution is simple and provides a strong fixing.

Preferably, the support and the moulding are made of a polymer material.

The invention also comprises other detail features shown in the following detailed description of an embodiment of the invention and in the attached figures.

### Brief Description of the Drawings

The advantages and features of the invention are apparent from the following description in which preferred embodiments of the invention are described in reference to the figures in a non-limiting manner with respect to the scope of the main claim.
Figure 1 is a front perspective view of an assembly formed by a moulding and a support, which form a basic unit of the device according to the invention. The moulding is in a free position, i.e., separated from the support.
Figure 2 is a front perspective view of the assembly in the fixing position, i.e., with the moulding fixed by pressure to the support.
Figure 3 is a rear perspective view of the assembly in the free position.
Figure 4 is a rear perspective view of the assembly in the fixing position.
Figure 5 is a side view of the assembly in the free position.
Figure 6 is a side view of the assembly in the fixing position.
Figure 7 is a partial bottom view of the assembly in the fixing position.
Figure 8 is a rear perspective view of the assembly in the fixing position, from another angle.
Figure 9 is a rear perspective view of the support.
Figure 10 is a rear perspective view of the support, from another angle.
Figure 11 is an exploded rear perspective view of the support, from the same angle as the view of Figure 10.
Figure 12 is a perspective view of the first piece of the support.
Figure 13 is a perspective view of the second piece of the support.
Figure 14 is a rear perspective view of an assembly formed by two mouldings and two supports, which form another device according to the invention, with the moulding in the free position.
Figure 15 is a rear perspective view of the assembly of Figure 14, in the fixing position.

### Detailed Description of Several Embodiments of the Invention

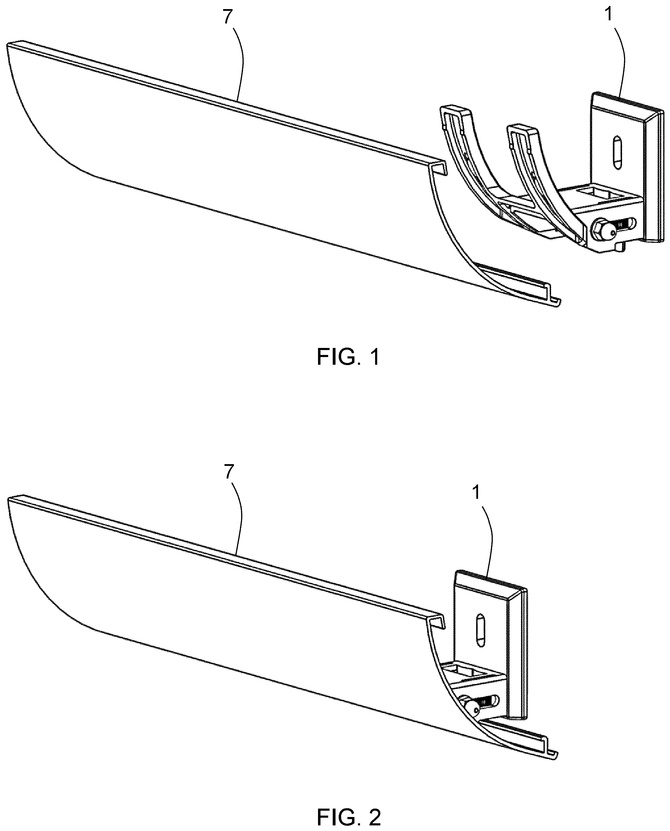

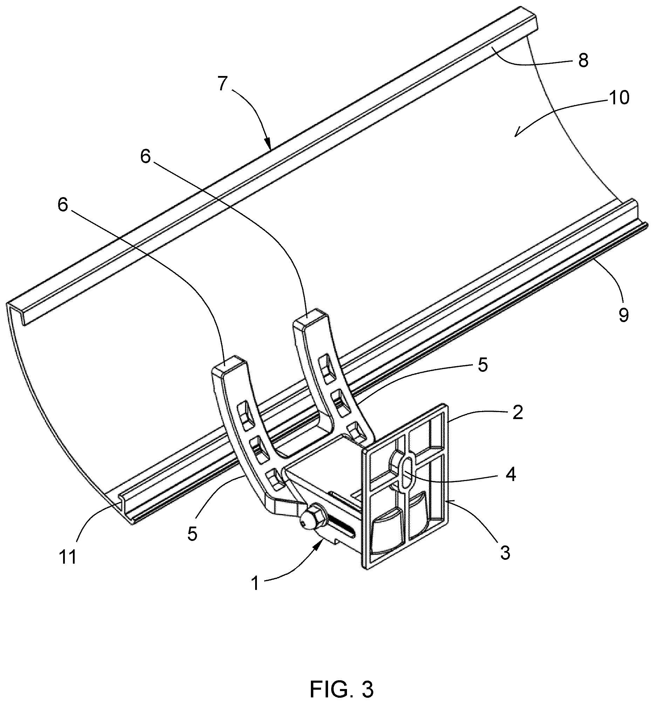

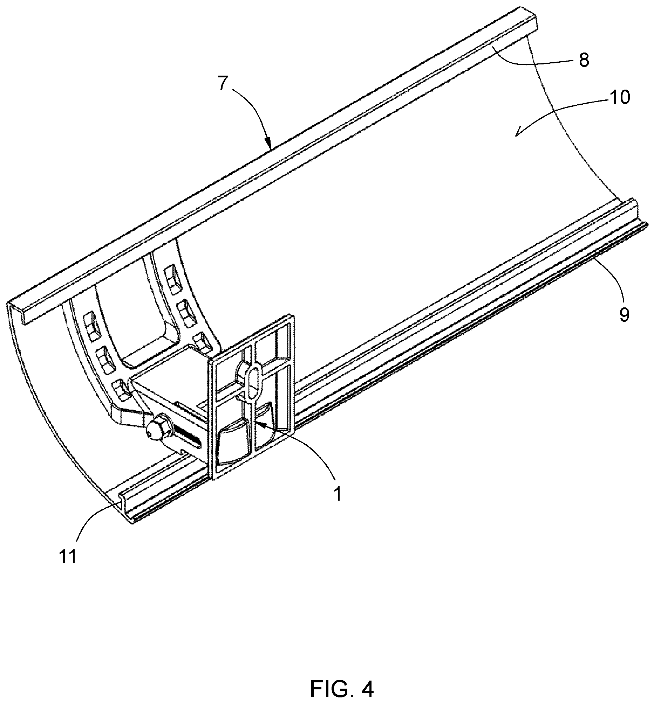

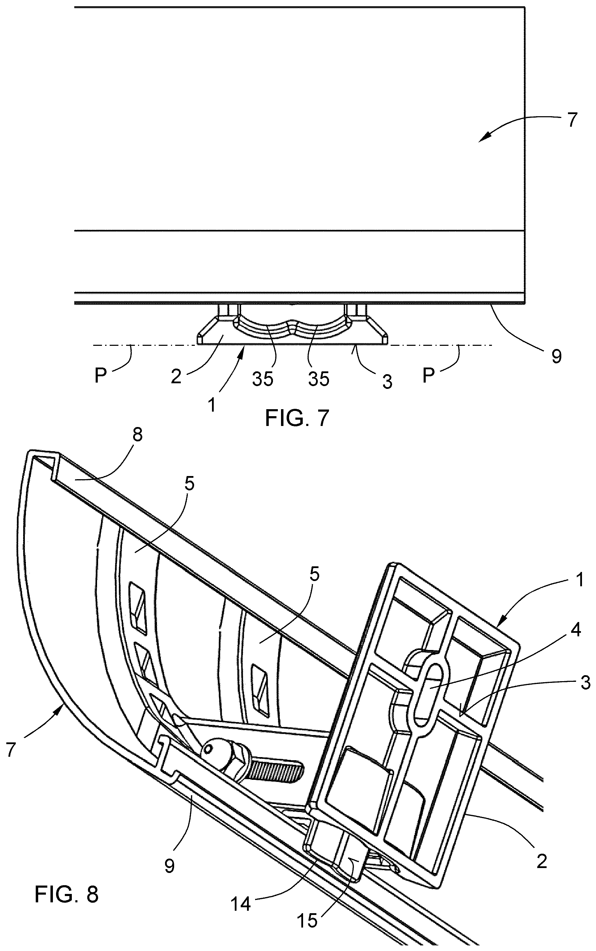

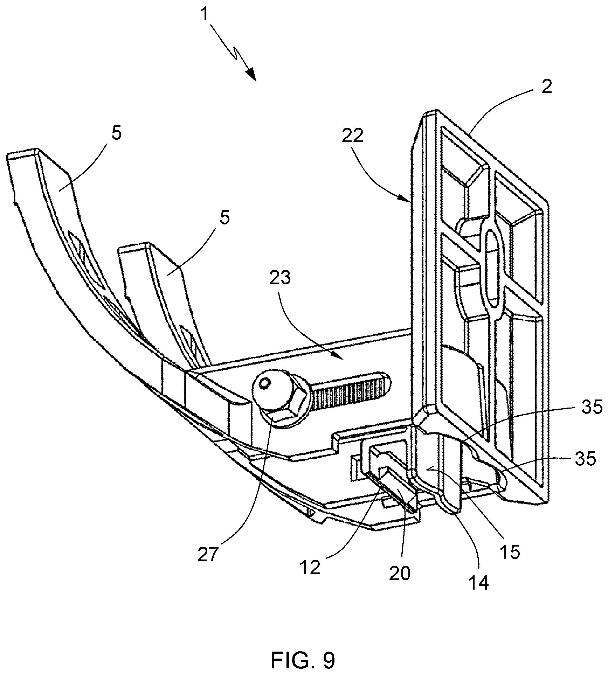

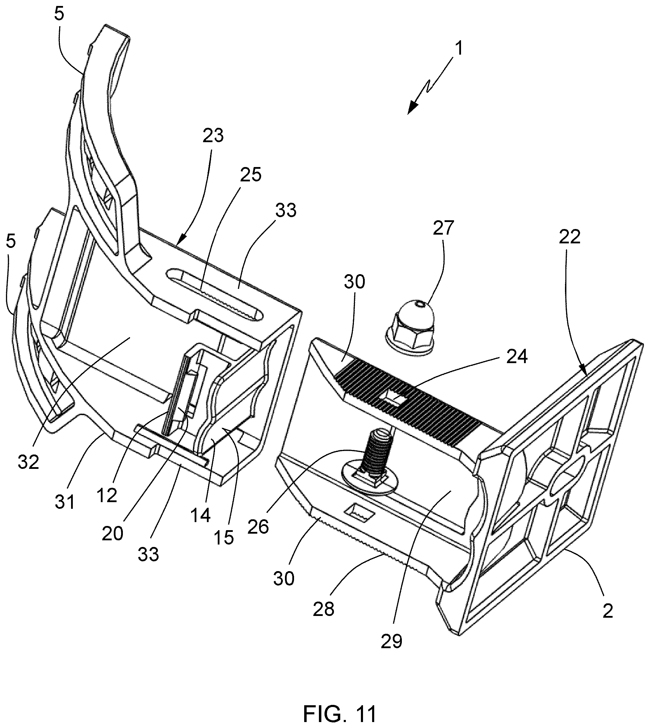

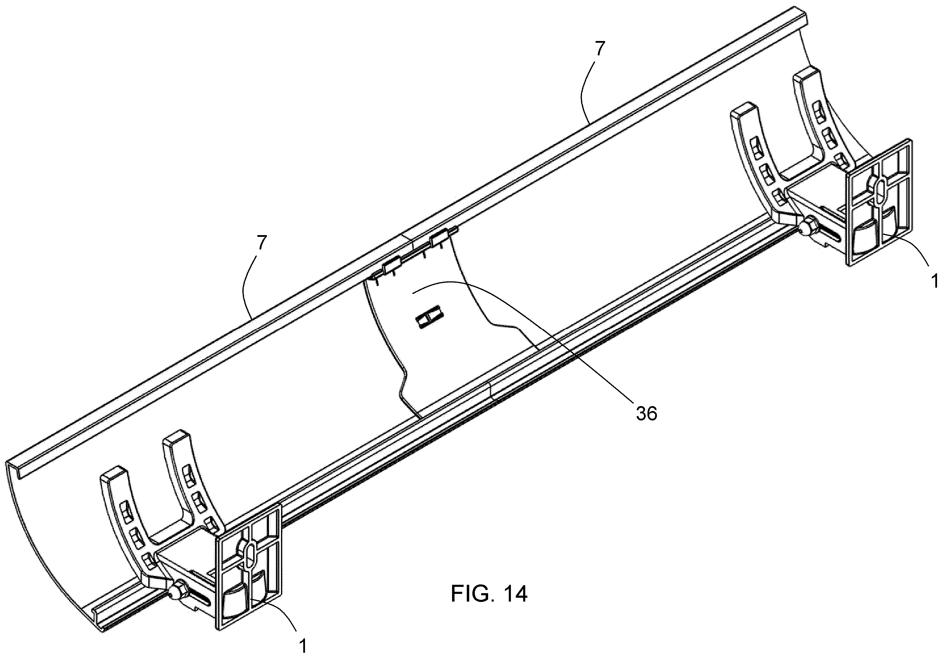

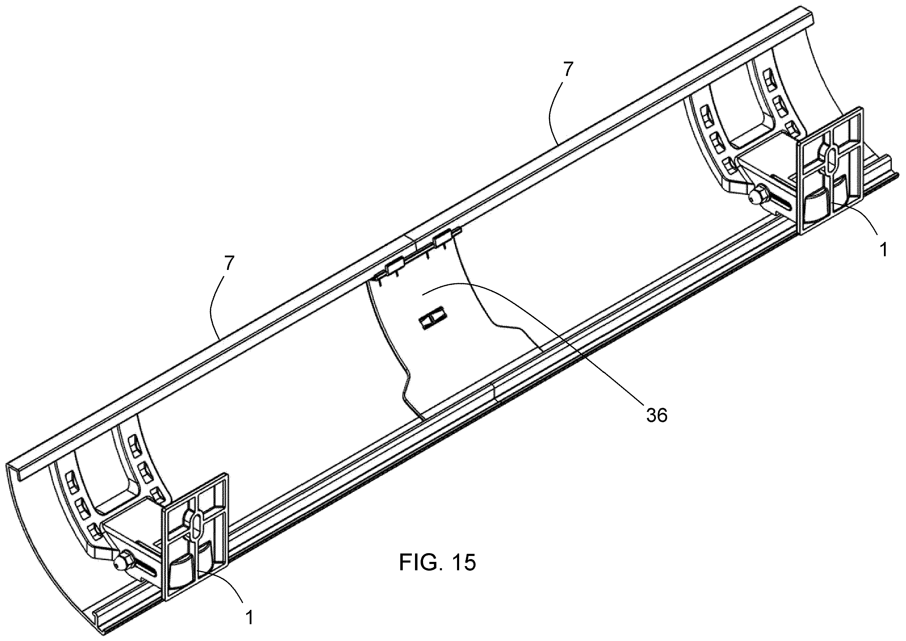

To facilitate description, Figures 1 to 13 show the most basic embodiment of the device according to the invention, which consists of an assembly formed by a moulding and a support. In the most common applications, the device according to the invention is formed by several supports and one or more aligned mouldings. For example, Figures 14 and 15 show a possible embodiment in which the device is made up of two supports and two aligned mouldings fixed to one another by a connecting piece. All these devices according to the invention are preferably used to conceal electrical or communications cables laid horizontally in a wall. In particular, in the most advantageous applications of the invention, the wall is a façade of a building and the cables are fiber optic cables.

In the preferred embodiments described below, all the components of the device, including the mouldings, the pieces making up the supports, and the fixing nuts and screws, are pieces made of a polymer material such as, for example, PVC (polyvinyl chloride) or polycarbonate. In other embodiments, the fixing nuts and screws, as well as the connecting pieces for fixing several aligned mouldings to one another can be made of a metal material.

The device shown in Figures 1 to 13 is formed by a support 1 and a moulding 7 removable fixed by pressure to the support 1. In a free position, shown in Figures 1, 3, and 5, the moulding 7 is separated from the support 1. In a fixing position, shown in Figures 2, 4, and 6, the moulding 7 is fixed by pressure to the support 1.

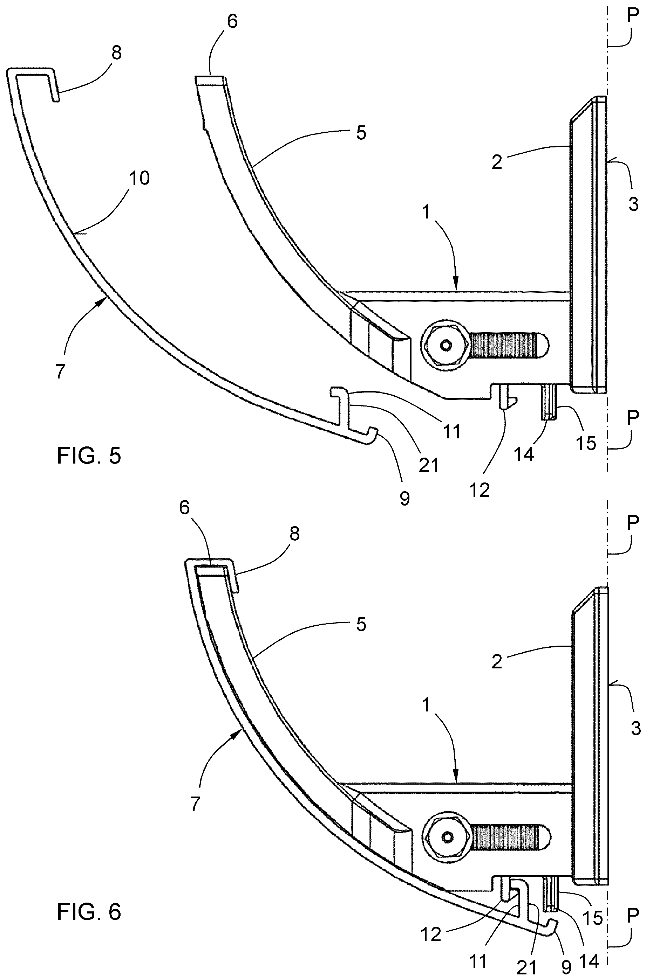

The support 1 has a base 2 with a flat face 3 in a plane P. The plane P is the plane of the wall (not shown in the figures) to which the support 1 is fixed. The base 2 has fixing means 4 for fixing said base 2 to the wall. In the depicted embodiment, these fixing means consist of an oblong hole for the passage of a fixing screw (not shown in the figures). When the base 2 is fixed to the wall, its flat face 3 rests against the wall. The support 1 comprises two parallel, identical support arms 5 extending in cantilevered fashion away from the base 2, such that the free ends 6 of the support arms 5 are separated from the base 2. The moulding 7 is formed by a profile resting against the two support arms 5 when the moulding 7 is in the fixing position. The moulding 7 has an upper edge 8 and a lower edge 9, which are parallel to one another and extending in the longitudinal direction of the moulding 7. The inner face of the moulding 7, i.e., the face facing the plane P in the fixing position, is a concave face 10 extending between the upper edge 8 and the lower edge 9. More precisely, as can be seen in Figures 5 and 6, the moulding 7 is formed by an arch-shaped thin wall between the upper edge 8 and the lower edge 9 in a plane orthogonal to the longitudinal direction of the moulding 7. As can be seen in Figure 6, in the fixing position the upper edge 8 and the lower edge 9 of the moulding 7 are parallel to plane P and separated from said plane P. The separation distance between plane P and the lower edge 9 is small. This small separation serves as a drainage for rainwater, and also to enable the operator to access the mechanism for releasing the snap-fitting with his/her fingers, as will be seen below. The separation distance between plane P and the upper edge 8 is much larger that the preceding distance. This large separation distance between plane P and the upper edge 8 defines a wide upper opening that allows easy access to the cables laid horizontally on the wall, as well as the addition of cables to the cabling, without having to remove the moulding 7.

As can be seen in Figures 5 and 6, the upper edge 8 of the moulding 7 forms a rim oriented towards plane P which is coupled, by shape complementarity, to the free end 6 of the support arms 5, such that it completely covers said free end 6 and rests against same. Furthermore, each support arm 5 preferably has an arch-shaped surface, in a plane orthogonal to the longitudinal direction of the moulding 7 in the fixing position, which is complementary to the arch shape of the concave face 10 of the moulding 7, such that the arch-shaped surface of the concave face 10 rests against the arch-shaped surface of each support arm 5.

The moulding 7 comprises, next to its lower edge 9, first fitting means 11 that cooperate with corresponding second fitting means 12 formed in the support 1. The first fitting means 11 are a lip 21 extending from the concave face 10 and which, in the fixing position, is snap-fitted with a shoulder 20 which is part of the second fitting means 12, as will be described below.

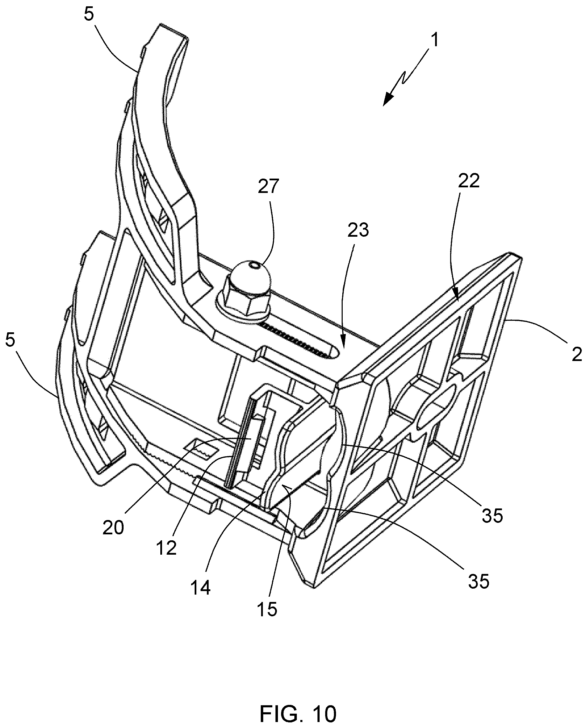

As shown in Figures 10 to 13, the support 1 comprises a first piece 22 comprising the base 2 and a second piece 23 comprising the second fitting means 12 and the support arms 5. The first piece 22 is slidingly coupled to the second piece 23, such that the separation distance between these two pieces 22 and 23 can be adjusted in a direction orthogonal to plane P. The first piece 22 has a drawer-shaped part 28, with a base wall 29 and two facing side walls 30. The second piece 23 also has a drawer-shaped part 31, corresponding to that of the first piece 22, with a base wall 32 and two side walls 33. The drawer-shaped part 28 of the first piece 22 slidingly fits into the drawer-shaped part 31 of the second piece 23. The support 1 comprises fixing means for fixing the relative position between the first piece 22 and the second piece 23 in the direction orthogonal to plane P. These fixing means are an opening 24 in the form of a hole on one of the side walls 30 of the first piece 22, a corresponding opening 25 in the form of an elongated hole, on one of the side walls 33 of the second piece 23, a screw 26 going through these two facing openings 24, 25, and a nut 27 that is screwed onto the screw 26.

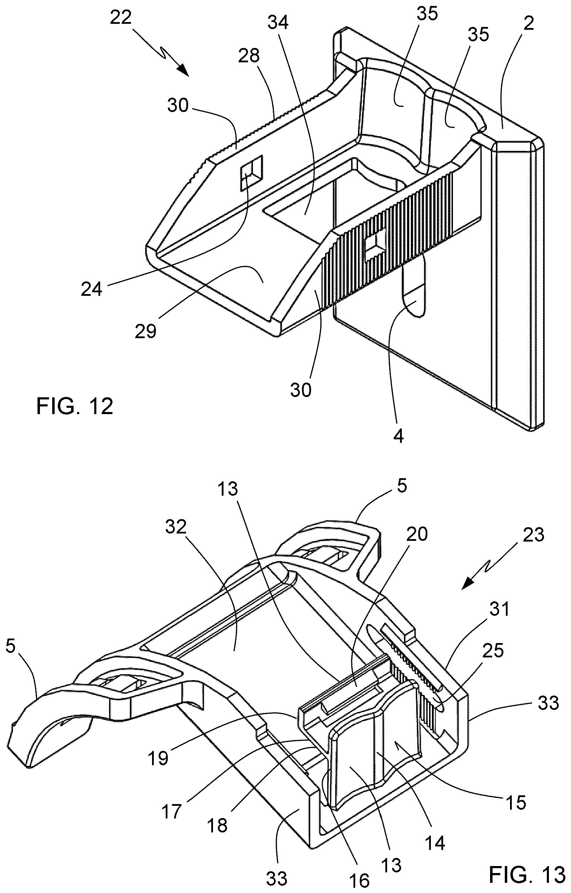

The second fitting means 12 are formed in the second piece 23 and consist of an elastically flexible tab 13 and a push element 14. In the depicted embodiment, the push element 14 is integrated in the tab 13 in a single piece. The tab 13 comprises a main flap 16 connected to the base wall 32 of the second piece 23 and extending parallel to plane P, and a secondary flap 17 extending from the main flap 16 and being elbow-shaped, with a first segment 18 orthogonal to plane P and a second segment 19 parallel to said plane P. A shoulder 20 facing the main flap 16 is formed in the second segment 19. In the fixing position, the lip 21 of the moulding 7 is introduced between the main flap 16 and the second segment 19 of the secondary flap 17 and is snap-fitted with the shoulder 20. In the fixing position shown in Figure 6, the lower edge 9 of the moulding 7 is arranged in front of an end of the main flap 16, such that the moulding 7 covers the space comprised between the second segment 19 of the secondary flap 17 and the main flap 16 (indicated in Figure 13).

A push surface 15 is formed on one face of the main flap 16 facing plane P and opposite the face from which the first segment 18 of the secondary flap 17 extends. The main flap 16 and the push surface 15 make up a push element 14 which, when pressed, causes the tab 13 to bend elastically to thereby release the snap-fitting between the lip 21 and the shoulder 20. The base wall 29 of the first piece 22 comprises a window 34 with the tab 13, including the push element 14, going through it with allowance. This allowance allows the sliding of the second piece 23 with respect to the first piece 22 in the direction orthogonal to plane P. To couple the first piece 22 and the second piece 23, the tab 13, including the push element 14, is passed through the window 34.

Advantageously, the push surface 15 forms two juxtaposed curved cradles, each of said curved cradles having an arc of curvature according to an axis parallel to plane P and perpendicular to the lower edge 9 in the fixing position. The base 3 of the support 1 comprises two juxtaposed concave recesses 35, facing the two juxtaposed curved cradles formed by the push surface 15.

The operator presses on the push element 14 to release the snap-fitting between the lip 21 and the shoulder 20 and to thereby enable the removal of the moulding 7 fixed by pressure to the support 1. To that end, the operator inserts his/her index and ring fingers through the space between the two concave recesses 35 of the base 2 and the two curved cradles of the push surface 15, and presses on the push surface 15 with these two fingers, pushing it in a direction orthogonal to plane P and opposite same. This causes an elastic bending of the tab 13, more specifically an elastic bending of the main flap 16, which moves the shoulder 20 away from plane P and the operator thus releases it from being snap-fitted to the lip 21. Therefore, in the fixing position, the push surface 15, and therefore the push element 14, can be accessed with fingers from the outside through the separation between the lower edge 9 of the moulding 7 and plane P.

In the embodiment shown in Figures 14 and 15, the device comprises two mouldings and two supports 1. The mouldings 7 and the supports 1 are the same as those described above for the embodiment of Figures 1 to 13, and the operation of the device is the same. The two mouldings 7 are arranged aligned with and fixed to one another by a connecting piece 36 fixed by pressure to the two ends of the mouldings 7. Other embodiments in which a single moulding 7 is fixed by pressure to two or more supports 1 are possible.

## Claims

1. A device for concealing electrical or communications cables in a wall, comprising:
- at least one support (1) to be fixed to the wall, said support (1) comprising a base (2) with a flat face (3) in a plane (P) to be applied against the wall, and fixing means (4) for fixing said base (2) to the wall, and at least one support arm (5) extending in cantilevered fashion away from said base (2), and having a free end (6) separated from said base (2);
- at least one moulding (7), formed by a profile resting against said support arm (5) and removably fixed by pressure to said support (1), said moulding (7) having an upper edge (8), a lower edge (9) parallel to said upper edge (8) and a concave face (10) facing said plane (P) and extending between said upper edge (8) and said lower edge (9), said support (1) and said moulding (7) being configured such that in a fixing position, in which said moulding (7) is fixed by pressure to said support (1), the upper edge (8) and the lower edge (9) of the moulding (7) are parallel to said plane (P) and are separated from said plane (P), the separation distance between said plane (P) and said upper edge (8) being greater than the separation distance between said plane (P) and said lower edge (9);
**characterised in that** said upper edge (8) of the moulding (7) is coupled, by shape complementarity, to said free end (6) of the support arm (5), and said moulding (7) comprises next to said lower edge (9) first fitting means (11) that cooperate with corresponding second fitting means (12) comprised in said support (1), such that said first fitting means (11) are snap-fitted with said second fitting means (12) in the fixing position; said second fitting means comprising an elastically flexible tab (13) and a push element (14) that cooperates with said tab (13) such that, when pressed, said push element (14) causes an elastic bending of said tab (13) which releases the snap-fitting between said first fitting means (11) and said second fitting means (12); and **in that**, in said fixing position, said upper edge (8) is coupled to said free end (6), said first and second fitting means (11, 12) are snap-fitted together and said push element (14) is accessible from the outside through the separation between said lower edge (9) of the moulding (7) and said plane (P).

2. The device according to claim 1, **characterised in that** said upper edge (8) of the moulding (7) is formed such that, when it is coupled by shape complementarity to said free end (6) of the arm (5), it completely covers said free end (6) and rests against same.

3. The device according to any one of claims 1 or 2, **characterised in that** said push element (14) comprises a push surface (15), for pressing said push element (14), facing said plane (P).

4. The device according to claim 3, **characterised in that** said push surface (15) forms at least one curved cradle, with an arc of curvature according to an axis parallel to said plane (P) and perpendicular to said lower edge (9) in the fixing position.

5. The device according to claim 4, **characterised in that** said push surface (15) forms two juxtaposed curved cradles, each of said curved cradles having an arc of curvature according to an axis parallel to said plane (P) and perpendicular to said lower edge (9) in the fixing position.

6. The device according to claim 5, **characterised in that** said base (3) of the support (1) comprises two juxtaposed concave recesses (35) facing said two juxtaposed curved cradles formed by the push surface (15).

7. The device according to any one of claims 3 to 6, **characterised in that** said tab (13) comprises a main flap (16) connected in the body of said support (1) and extending parallel to said plane (P), said push surface (15) being formed in said main flap (16).

8. The device according to claim 7, **characterised in that** said tab (13) comprises a secondary flap (17) extending from a face of said main flap (16) opposite said push surface (15), said secondary flap (17) being elbow-shaped, with a first segment (18) orthogonal to said plane (P) and a second segment (19) parallel to said plane (P), a shoulder (20) being formed in said second segment (19) facing said main flap (16); and **in that** said first fitting means (11) comprise a lip (21) extending from said concave face (10) and snap-fitting with said shoulder (20).

9. The device according to claim 8, **characterised in that**, in the fixing position, said lower edge (9) of the moulding (7) is arranged in front of an end of said main flap (16), such that said moulding (7) covers the space comprised between said second segment (19) of the secondary flap (17) and said main flap (16).

10. The device according to any one of claims 1 to 9, wherein said support (1) comprises a first piece (22) comprising said base (2) and a second piece (23) comprising said second fitting means (12) and said support arm (5), said first piece (22) being slidingly coupled to said second piece (23), such that the separation distance between said first piece (22) and said second piece (23) coupled to one another, in a direction orthogonal to said plane (P), can be adjusted; and said support (1) comprising fixing means (24, 25, 26, 27) for fixing the relative position between said first piece (22) and said second piece (23) in the direction orthogonal to the plane (P); **characterised in that** said first piece (22) has a drawer-shaped part (28), with a base wall (29) and two facing side walls (30), and said second piece (23) has a corresponding drawer-shaped part (31), with a base wall (32) and two side walls (33), in which said drawer-shaped part (28) of the first piece (22) slidingly fits; said second fitting means (12) being fixed to said base wall (32) of the second piece (23); and said base wall (29) of the first piece (22) comprising a window (34) with said tab (13) and said push element (14) going through same with allowance, said allowance allowing the sliding of the second piece (23) with respect to the first piece (22) in the direction orthogonal to the plane (P).

11. The device according to claim 10, **characterised in that** said fixing means (24, 25, 26, 27) comprise an opening (24) in at least one of the side walls (30) of the first piece (22), a corresponding opening (25) in at least one of the side walls (33) of the second piece (23), a screw (26) going through said openings (24, 25), and a nut (27) that is screwed onto said screw (26).

12. The device according to any one of claims 1 to 11, wherein said support (1) and said moulding (3) are made of a polymer material.
